# EUROPEAN PATENT APPLICATION

(11) **EP 1 679 175 A2**
(43) Date of publication of application: **12.07.2006**
(21) Application number: 06000103.9
(22) Date of filing: 04.01.2006
(51) Int. Cl.: B29C 47/90

(54) **Vacuum calibrating device for extruded profiles**

(30) Priority: 07.01.2005 IT BO20050005
(71) Applicant: Tecno Systems S.R.L., 44013 Consandolo FE (IT); B-TECH S.R.L., 44013 Consandolo FE (IT)
(72) Inventor: Mantovani, Daniele, 44011 Benvignante di Argenta (FE) (IT)
(74) Representative: Negrini, Elena

(57) **Abstract**

A vacuum calibrating device for extruded profiles comprises at least a vacuum manifold (2) with outlets for a calibre (3) and a connection (4) for the vacuum.

The connection (4) is linked to at least a narrow passage (5) of at least one Venturi tube (6), in which a air flow of air powered by a compressed air source (7) there though.

## Description

The present invention relates to the field concerning the extrusion technique and particularly it refers to a vacuum calibrating device for extruded profiles.

In the field of extrusion there are known calibrating devices using normal liquid mechanical vacuum pump.

A drawback of such calibrating device consists in that the vacuum capacity in the normal liquid mechanical vacuum pump is almost constant and is not adjustable under 90% of the maximum value which is excessive in the most of the cases.

Since the vacuum level in the manifolds of the known calibrating devices cannot be lowered by means of the pump, one or more outlets of the manifolds are utilized to release air from the environment reducing the vacuum until the necessary value. This causes a high energy consumption also when the requested vacuum level inside of the calibrators is low.

An object of the present invention is to propose a vacuum calibrating device for the extruded profiles able to avoid the waste of energy by using the energy for the vacuum in an efficient manner.

Other object is to propose a calibrating device having a small number of moving parts, reliable, with simple and rapid maintenance.

Further object is to propose a silent and safe calibrating device.

The vacuum calibrating device for extruded profiles, according to the present invention, allows to obtain a wide variation range of vacuum capacity (from almost zero value until maximum capacity) and pneumatically operating.

In such manner the power used for the vacuum, decreases lowering the vacuum capacity resulting an increase of the operation efficiency of the calibrating device compared with those known devices using liquid mechanical vacuum pump.

The characteristics of the invention are highlighted in the following with particular references to the attached drawings, in which
- the figure 1 shows a schematic view of the pneumatic circuit of the vacuum calibrating device, object of the present invention;
- the figure 2 shows a schematic view of the part of pneumatic circuit of figure 1, fit to generate the vacuum for the calibrating device.

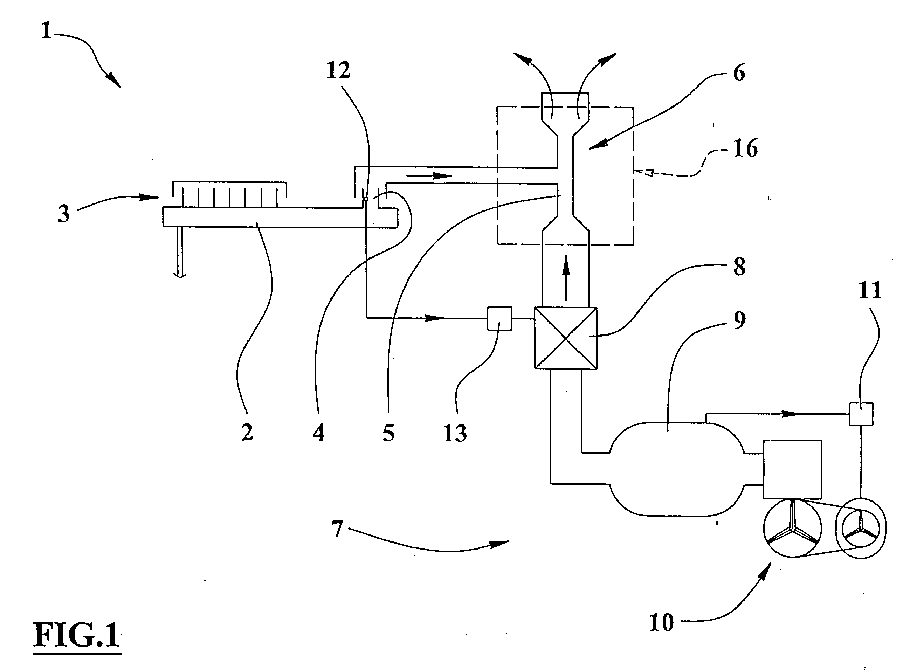

With reference to figure 1, the numeral 1 indicates the vacuum calibrating device for extruded profiles, of the present innovation.

The calibrating device 1 comprises at least one vacuum manifold 2 to feed a respective calibre 3.

Said manifold 2 is also provided with a connection 4 for the vacuum and with water link, of know type and not showed.

The connection 4 of the manifold 2 is connected by means of a non collapsible type duct, with a vacuum source 16 comprising a set of Venturi tubes 6, each of them being provided with a respective narrow passage 5.

The linkage of the Venturi tubes 6 of the vacuum source 16 to the compressed air source 7 is carried out by means of a pressure-tight duct comprising an adjustable pressure reducer 8 fit to regulate the vacuum of the manifold 2 varying the air flow speed along the narrow passages 5 of the main ducts of the Venturi tubes 6 and in which the vacuum is generated.

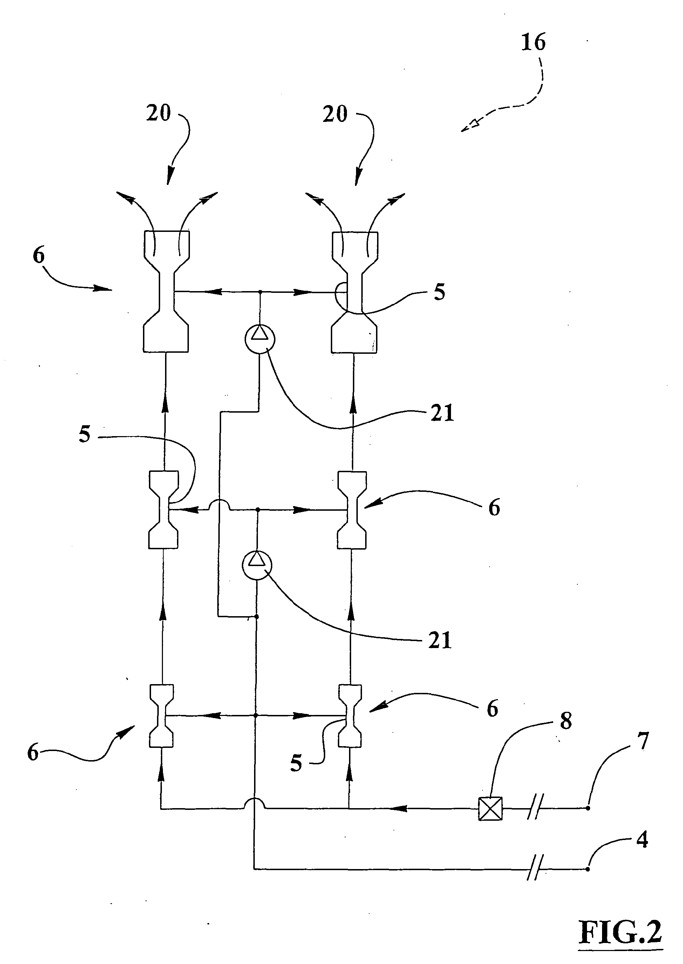

More in particular, with reference to figure 2, the device 1 includes one or more sets of Venturi tubes 20, in series pneumatically connected to be passed through by the same air flow produced by the source 7 and having the respective narrow passages 5 linked to the connection 4.

As shown in figure 2, the Venturi tubes sets are in number of two, but the present invention provides that the device can comprise only one or more than two of said sets depending on the number and requirements of the calibres.

The section surface of a narrow passages 5 of a Venturi tube 6 of each set is bigger than the section surface of the Venturi tube 6 that precedes it in respect to the direction of the air flow passed through it.

The narrow passages 5 of the Venturi tubes downstream the first one in respect to the air flow, are linked to the connection 4 of the vacuum manifold 2 by means of respective check valves 21, for example of membrane type, fit to avoid the air exit from the narrow passages 5 toward the manifold in some operation conditions.

The first narrow passage 5, upstream of the others respect to the air flow, is directly linked to the connection 4 of the vacuum manifold 2 without check valve, since it is able to maintain an sufficient depression in any operation condition.

The invention provides that the device can be equipped, downstream of the tubes 6, with a noise suppressor made of sound-absorb material and that it can comprise, upstream of the narrow passages, an air filter of the manifold. Such suppressor and filter are of known type and not showed.

Each Venturi tube can be constituted by a nozzle flowing into a depression room and slightly spaced apart from, and faced to, a mouthpiece of a duct for the air flow.

Such duct, in the last Venturi tube, allows the air outlet toward outside, and, in the remaining tubes, carry out the nozzle inlet for the successive Venturi tubes.

In such Venturi tubes, the narrow passage 5 is carried out by the fluid dynamics effect between the nozzle and the mouthpiece of the duct of the same room in whose wall is carried out a connection opening of the narrow passage to the connection 4 of the vacuum manifold 2.

Such nozzle, room and mouthpiece are not showed in detail but only in schematic manner.

The device can be arranged for the connection to anyone compressed air source 7, such as a pre-existing distribution lines for the compressed air or a source of the type comprising at least a tank 9 powered by a motor-driven compressor 10 as showed in figure 1.

Such motor-driven compressor 10 is controlled by a pressure switch 11 connected to the tank 9. In this manner the tank accumulates, excluded the waste of energy, the energy in form of compressed air provided by the motor-driven compressor. Said compressed air is available according to the necessities for the vacuum generation in a controllable manner by means of the adjustment drives of the reducer 8.

In alternative, the invention provides that the vacuum manifold 2, or the connection 4, comprises a vacuum sensor 12, for example of piezoelectric type, electrically connected to control means 13 to provide them a signal proportional to the pressure of the manifold.

The control means 13 command, by means of an electric link, the adjustable pressure reducer 8, of electric driven type, to feedback control the vacuum pressure value in the manifold 2, for example set on a respective control input mean of the control means 13.

The operation of the device provides that the increase of air flow speed along the narrow passages causes, into these latter, a pressure reduction till values lower than the environmental values and depending from, according to the D. Bernoulli law, the geometric characteristics of the tubes and from the air flow capacity in the main duct of each set of Venturi tubes.

Such depression is "transmitted" from the respective connection 4 to the manifold 2 in which generates a vacuum whose pressure is adjusted varying the air capacity by means of the adjustable pressure reducer 8 controlled by means of a manual action or in an automatic close loop manner by means of the control means 13.

An advantage of the present invention is to provide a vacuum calibrating device for extruded profiles able to avoid energetic wastes using in efficient manner the energy needed for the vacuum.

Other advantage is to provide a vacuum calibrating device with few moving parts, reliable, silent and that it can be easily and quickly maintained.

Further advantage is to provide a device with a few power electric links, that it can be installed simply and quickly and be used safely.

## Claims

1. Vacuum calibrating device for extruded profiles comprising at least a vacuum manifold (2) with outlets for calibres (3) and a connection (4) for the vacuum; said device (1) being **characterized in that** the connection (4) is linked to at least one narrow passage (5) of at least one Venturi tube (6) passed through by an air flow powered by a compressed air source (7).

2. Device according to claim 1 **characterized in that** the at least one Venturi tube (6) is linked to the compressed air source (7) by means of an adjustable pressure reducer (8).

3. Device according to claim 1 **characterized in that** it comprises at least one set of Venturi tubes (20) pneumatically linked in series in order to let the same air flow passed through, which is generated by the source (7) and having the respective narrow passages (5) linked to the connection (4).

4. Device according to claim 1 **characterized in that** the section of a narrow passages (5) of one Venturi tubes (6) of the at least one first set is bigger than the section of the Venturi tube (6) that precedes it respect to the air flow direction passing therethrough.

5. Device according to claim 3 **characterized in that** at least the narrow passage (5), downstream of the others respect to the air flow, is linked to the connection (4) of the vacuum manifold (2) by means of a respective check valve (21).

6. Device according to claim 5 **characterized in that** at least the narrow passage (5), downstream of the others respect to the air flow, is linked directly to the connection (4) of the vacuum manifold (2).

7. Device according to claim 3 **characterized in that** it comprises more sets of Venturi tubes (20) linked in series and having the respective narrow passages (5) linked to the connection (4).

8. Device according to claim 1 **characterized in that** the compressed air source (7) comprises at least a tank (9) and a motor-driven compressor (10).

9. Device according to claim 7 **characterized in that** the motor-driving compressor (10) is controlled by a pressure switch (11) linked to the tank (9).

10. Device according to claim 1 **characterized in that** the vacuum manifold (2), or the connection (4), comprises a vacuum sensor (12) linked to control means (13) of commanding the adjustable pressure reducer (8) for the feedback control of the vacuum in the vacuum manifold (2).

11. Device according to claim 1 **characterized in that** it is arranged for the connection to a pre-existent distribution line for the compressed air.
